# EUROPEAN PATENT APPLICATION

(11) **EP 1 650 880 A1**
(43) Date of publication of application: **26.04.2006**
(21) Application number: 04731813.4
(22) Date of filing: 08.05.2004
(51) Int. Cl.: H04B 7/005

(54) **A METHOD FOR IMPROVING CHANNEL TRANSMISSION EFFICIENCY IN WIRELESS NETWORK**

(30) Priority: 08.07.2003 CN 03146594
(71) Applicant: Lenovo (Beijing) Limited, Haidian District, Beijing 100085 (CN)
(72) Inventor: YANG, Xuexian, Haidian District Beijing 100085 (CN); HOU, Zifeng, Haidian District Beijing 100085 (CN); YANG, Yinsi, Haidian District Beijing 100085 (CN); ZHU, Hong, Haidian District Beijing 100085 (CN); GAO, Mei, Haidian District Beijing 100085 (CN); SHAN, Wenying, Haidian District Beijing 100085 (CN)
(74) Representative: Pawlyn, Anthony Neil
(86) International application number: PCT/CN2004/000446
(87) International publication number: WO 2005/004350

(57) **Abstract**

The present invention discloses a method for improving channel transmission efficiency in a wireless network. In the course of data transmission, a length of a data frame split from a Media Access Control (MAC) layer service data packet is changed in real-time according to a channel state of the wireless network. The inventive method for improving channel transmission efficiency in a wireless network can effectively improve the efficiency of wireless channel data transmissions and can be easily implemented.

## Description

### BACKGROUND OF THE INVENTION

### Field of the Invention

The present invention relates to data transmission techniques in wireless networks, and more particularly, to a method for improving channel transmission efficiency in a wireless network.

### Description of the Prior Art

Wireless networks are developed from wired networks connected by wired cables, and as compared with the wide-spreading networks with connection network cables, mainly differ in the implementation manners of the physical layer: the wireless networks transmit through wireless channels whereas the wired networks transmit through wired channels. The main features of the wired channels are stable transmission performance, enough and inexpensive bandwidth, low bit error rate, and fewer influences by environments. But, the transmission characteristics of the wireless channels are mutable with relatively lack and expensive bandwidth, high bit error rate and more sensitive to environments. For more compatible with those of wired networks, the physical layer and media access control (MAC) layer protocols follow the techniques and methods used in wired networks in a great extension. While performing data transmissions, a MAC layer service data packet, MAC service data unit (MSDU), is split into MAC protocol data unit (MPDU), and a pilot and a frame header are added to the MPDU to form a physical frame to be transmitted over the physical layer. MPDU is also referred to as a physical layer convergence protocol (PLCP) service data unit (PSDU) in the physical frame.

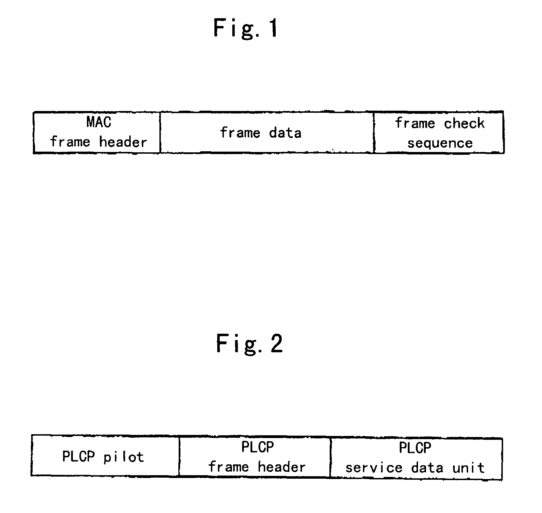

Referring to Fig. 1 and Fig. 2, Fig. 1 is a schematic diagram of the structure of the MSDU frame, and Fig.2 is a schematic diagram of the structure of the physical frame. In addition to the payload data, the MSDU frame also includes additional information necessary for network transmission: an MAC frame header and a frame check sequence. And the physical frame includes a PLCP pilot, a frame header and a PSDU.

During the course of splitting the MSDU into the MPDU, as in the wired networks, a frame length of the split MPDU is also fixed after configuration in the wireless networks, and the continuous changes in the transmission characteristics of the wireless channels are not considered during data transmissions.

Presently, a method for splitting data packets in wireless networks is generally to split the MSDU into fixed MPDU according to a fixed threshold specified by protocols, typically data frames with a maximum frame length specified by protocols. This data packet splitting method succeeds to that for wired networks, and when this method is used to the wired channels with stable transmission performance, enough and inexpensive bandwidth, low bit error rate and fewer influences by environments, the channel transmission efficiency is relatively high.

However, wireless signals are rapidly attenuated and can hardly be correctly estimated, therefore with the changes in spaces, time or environments, the quality of the physical layer link will change dramatically. For example, in a room, the paths of multi-path reflection of the wireless signals will change when the door or window of the room is opened or closed, or when the door of a cabinet is opened or closed. Different building materials will be very distinct in absorption or attenuation for signals. Additionally, in wireless communication, changes in relative position or orientation of the both communication parties will result in a great difference in signal intensities.

Thus, the wireless channels are very different from the wired channels in the transmission characteristics. The data packet splitting method adapted to the wired networks will not be fully adapted to the wireless networks, and the critical problem lies in that the transmission efficiency of wireless channels is low.

The channel transmission efficiency in wireless networks can be evaluated from two aspects. On one hand, considering signal qualities, if the signal qualities are very good and there are no other negative factors such as interference in the channel, then generally no error data bit occurs and the bigger the data frame is, the more the payload data are, and thus the higher the channel transmission efficiency is. When error bits occur due to the presence of interference in the channel and the receiver detects error bits in the data frames or could not eliminate the error bits with the error correcting code method, the receiver discards the erroneous data frame, and the sender is required to retransmit this data packet. The retransmission of data packet obviously reduces the transmission efficiency of the wireless channels.

On the other hand, considering frame lengths, when the frame length is small, since the fixed frame header has a relative great ratio with respect to the whole frame, bit error rate has fewer influences on the transmission efficiency at this time. With an increased frame length and a constant frame header portion, the channel transmission efficiency can be improved. When the frame length is gradually increased, the influence of the frame header on the channel transmission efficiency becomes smaller and smaller. But since the frame length is increased, the transmission time period is also increased, and at a certain bit error rate, the probability of occurrence of error bits in the data frame is therefore increased, and thus the influence of the bit error rate on the channel transmission efficiency becomes more and more notable. If an error bit unable to be corrected occurs in the data frame transmitted over the wireless channel, the whole data frame needs to be retransmitted such that the data transmission efficiency of the channel is reduced.

Thus, at a certain channel bit error rate, one optimal length of data frame can maximize the effective transmission rate of the wireless channel. The existing fixed frame length data transmission method selects one optimal length of data frame to be fixed at an estimated channel bit error rate.

However, the transmission characteristics of the wireless channels and the signal-to-noise ratios of the wireless signals are mutable, and thus the bit error rate changes continuously and sometimes is low, and sometimes is high. Because the connection state of a wireless channel is not stable but changes continuously, and the bit error rate thereof is greatly influenced by factors such as signal intensities, signal qualities and environments, the existing fixed frame length data transmission method can not obtain high channel transmission efficiency in the wireless channels. Actually, in IEEE 802.11 b, an effective transmission rate can be only up to about 5Mbps, which is much lower than a named maximum rate of 11Mbps of this protocol.

### SUMMARY OF THE INVENTION

Therefore, it is an object of the present invention to provide a method for improving channel transmission efficiency in a wireless network which can select a length of payload data in a frame structure used in a wireless communication based on characteristics of a wireless channel, so as to improve data transmission efficiency of a wireless communication channel.

To achieve the above object, the present invention is implemented as follows.

A method for improving channel transmission efficiency in a wireless network which, in the course of data transmission, changes a length of a data frame split from a Media Access Control (MAC) layer service data packet in real-time according to a channel state of the wireless network.

This method may be in that, in the course of data transmission, the channel state of the wireless network is monitored in real-time, and if the channel of the wireless network is of a good quality or does not have a signal collision phenomenon, then the length of the data frame split from the Media Access Control (MAC) layer service data packet is increased, and if the channel of the wireless network is of a bad quality or has severe signal collisions, then the length of the data frame split from the Media Access Control (MAC) layer service data packet is decreased.

This method may comprise steps of:
1) starting data transmission and splitting the MAC layer service data packet according to an initial threshold for the length of the data frame to transmit;
2) reading and recording acknowledgement information (ACK) sent by a partner in real-time;
3) determining the channel quality of the wireless network according to whether the ACK information has been successfully received for a predetermined times, if the channel of the wireless channel is of a good quality, then increasing the threshold for the length of the data frame split from the MAC layer service data packet, and otherwise decreasing the threshold for the length of the data frame;
4) splitting a subsequent MAC layer service data packet according to the threshold for the length of the data frame adjusted in step 3) to transmit;
5) repeating steps 2), 3) and 4) until the fend of this data transmission.

The initial threshold may be a threshold specified in *Wireless LAN Media Access Control (MAC) and Physical Layer (PHY) Specifications* (IEEE 802.11).

The step 3) may include steps of:
3A) presetting the times N for which the ACK information is continuously received successfully before increasing the threshold for the length of the data frame, and the times M for which the ACK information is continuously received unsuccessfully before decreasing the threshold for the length of the data frame;
3B) when the ACK information is continuously received successfully for N times, the channel of the wireless network being of a good quality and increasing the threshold for the length of the data frame;
3C) when the ACK information is continuously received unsuccessfully for M times, the channel of the wireless network being of a bad quality and decreasing the threshold for the length of the data frame;
   wherein N and M can be either same or different.

The step 3) may also include steps of:
3a) presetting a time interval for adjusting the threshold for the length of the data frame;
3b) determining whether the ACK information is received for the predetermined times within the time interval preset in step 3a), if the ACK information is successfully received for the predetermined times, then the channel of the wireless network being of a good quality and increasing the threshold for the length of the data frame, and otherwise the channel of the wireless network being of a bad quality and decreasing the threshold for the length of the data frame.

The preset time interval may be a product obtained by multiplying the number of the sent data frames by a maximum time duration required from sending of one data frame to receipt of an ACK of this frame specified in IEEE 802.11 protocol.

The predetermined times for receiving the ACK information may be in a range between a number obtained by subtracting the number of lost packets allowable to the user from the number of the sent data frames and the number of the sent data frames.

The increasing range of the threshold for the length of the data frame may be to increase 0 - 100% of the previous threshold each time; and the decreasing range of the threshold for the length of the data frame may be to decrease 0 - 100% of the previous threshold each time.

The threshold for the length of the data frame may be in a range from a minimum frame length threshold specified in IEEE 802.11 specification to a maximum frame length threshold specified in IEEE 802.11 specification.

As it is apparent from the inventive technical solutions, this method for improving channel transmission efficiency in a wireless network according to the present invention is an adaptive data packet splitting method of selecting a MAC frame length based on channel characteristics. In the course of the data transmission, the length of the payload data in the frame structure can be changed continuously based on the wireless channel characteristics in order to ensure a data transmission with a nearly optimal data frame length at different channel bit error rates, thereby improving the efficiency of the wireless channel data transmission. And it can be easily implemented without any changes to the hardware devices.

### BRIEF DESCRIPTION OF THE DRAWINGS

Fig. 1 is a schematic diagram of a MSDU frame structure;
Fig. 2 is a schematic diagram of a physical frame structure;
Fig. 3 is a flow chart for data transmission according to a first preferred embodiment of the present invention; and
Fig. 4 is a flow chart for data transmission according to a second preferred embodiment of the present invention.

### DETAILED DESCRIPTION OF THE PREFERRED EMBODIMENTS

For making the object, technical solutions and advantages of the present invention more clear and apparent, the present invention is further described in conjunction with the embodiments and with reference to the drawings in detail as below.

The inventive method for improving channel transmission efficiency in a wireless network is an adaptive data packet splitting method of selecting a MAC frame length based on channel characteristics. In the course of the data transmission, the length of the payload data in the frame structure can be changed continuously based on the wireless channel characteristics in order to perform a data transmission with a nearly optimal data frame length at different channel bit error rates.

There are various embodiments according to the present invention, and two preferred embodiments are exemplified as follows.

### First Preferred Embodiment

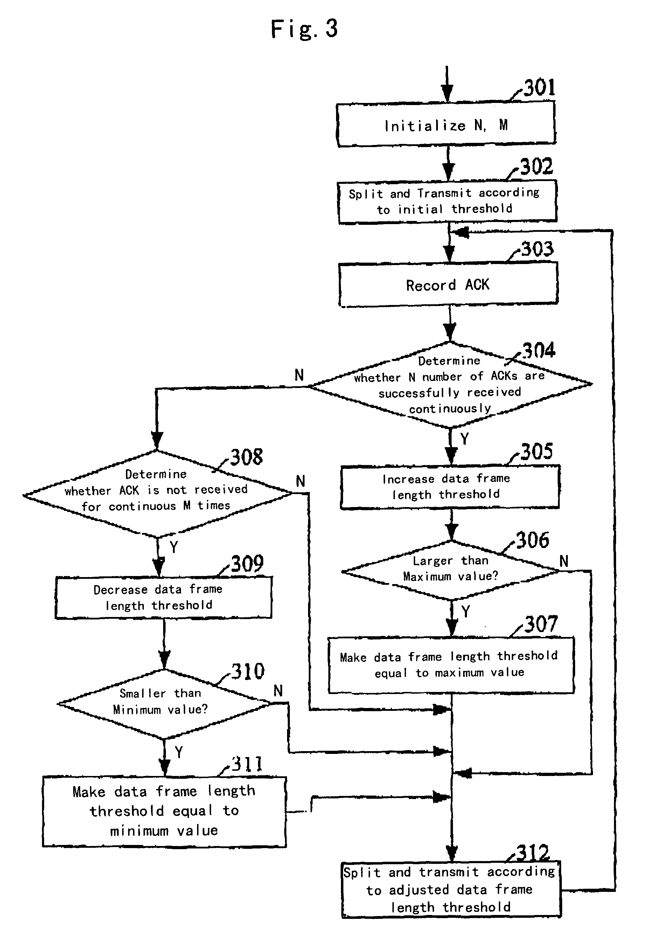

Referring to Fig. 3, it is a flow chart for data transmission according to a first preferred embodiment of the present invention. The present embodiment considers whether an acknowledgement frame ACK of an MPDU is received or not as a basis of the adaptive adjustment. The split MPDUs of each an MSDU are respectively acknowledged with the ACKs, that is the MPDU sending is successful if the ACK is received within a specified time interval, and otherwise the sending is failed and a retransmission is required. If the MPDU sending is failed, then the current channel state is considered of a bad quality and the bit error rate is high, the frame length needs to be decreased; and otherwise, the channel is considered of a good quality and the frame length can be increased.

The present embodiment achieves the object of adapting the wireless channels by changing the split threshold for the MAC frames in real-time, and the present flow includes the following steps:

Step 301: the times N for which the ACK information is continuously received successfully before increasing the threshold for the length of the data frame, and the times M for which the ACK information is continuously received unsuccessfully before decreasing the threshold for the length of the data frame are initialized, N and M can be either same or different.

In the present embodiment, the data packet loss is considered to be caused by interferences or noises, and the transmission medium for wireless communication are multi-user shared, and the data packet might be lost due to the collision of the data packets from different users. When only one packet is lost, it is not enough to conclude that the channel becomes worse. Similarly, the MAC frame lengths should not be increased immediately after only one data packet is successfully transmitted. The channel characteristics are considered to be definitely changed only when a plurality of continuous successful sending or unsuccessful sending occur. Therefore, N and M should be a constant larger than 1 and can be appropriately selected according to specific circumstance.

Step 302: the data transmission starts, and the MAC layer service data packet is split according to an initial threshold for the length of the data frame. This initial threshold can be a threshold specified in IEEE 802.11 specification.

Step 303: the acknowledgement information (ACK) sent by a partner is read and recorded in real-time.

Step 304: it is determined whether the ACK information is successfully received continuously for N times. If so, the wireless network is of a good channel quality, and steps 305 - 307 are performed, and otherwise step 308 is directly performed.

Steps 305 - 307: the threshold for the length of the data frame split from the MAC layer service data packet is increased; it is determined whether the threshold is larger than a maximum frame length threshold specified in IEEE 802.11 specification; if so, then the threshold for the length of the data frame is set to be equal to the maximum frame length threshold specified in IEEE 802.11 specification and then step 312 is performed, and otherwise step 312 is directly performed.

Step 308: it is determined whether the ACK information is unsuccessfully received continuously for M times. If so, the wireless network is of a bad channel quality, and steps 309 - 311 are performed, and otherwise step 312 is performed.

Steps 309 - 311: the threshold for the length of the data frame split from the MAC layer service data packet is decreased; it is determined whether the threshold is smaller than a minimum frame length threshold specified in IEEE 802.11 specification; if so, then the threshold for the length of the data frame is set to be equal to the minimum frame length threshold specified in IEEE 802.11 specification and then step 312 is performed, and otherwise step 312 is directly performed.

Step 312: the subsequent data are split according to the adjusted length of the data frame and then it returns to step 302 to process the subsequently transmitted data until the end of this data transmission.

In the present embodiment, the amplitude of increasing and decreasing the frame length threshold can be set by the user as necessary, as long as the requirements of no oscillation occurrence during the adjustment and high transmission efficiency can be satisfied. Before actually implemented, a plurality of simulation experiments can be performed so as to obtain the appropriate amplitude to be used in the implementation. If oscillation or a case of low transmission efficiency occurs in the implementation, the amplitude can be further modified. Generally, it is appropriate that the increasing and decreasing amplitude for the frame length for each time is within a range of 0 - 100% of the previous threshold. In the present embodiment, the increasing amplitude is configured as 30% of the previous threshold, and the decreasing amplitude is configured as 25% of the previous threshold. By testing the present embodiment within a certain time period, it shows that the number of bytes correctly transmitted by the present embodiment within this time period is 20% or higher more than that of the fixed length splitting transmission method.

### Second Preferred Embodiment

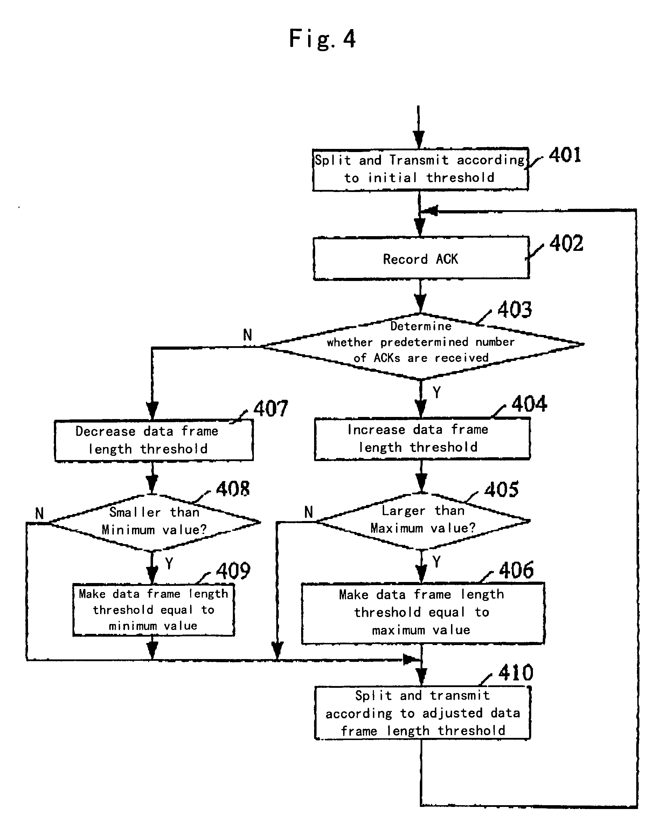

Referring to Fig. 4, it is a flow chart for data transmission according to a second preferred embodiment of the present invention. The present embodiment considers whether an acknowledgement frame ACK of an MPDU is received or not as a basis of the adaptive adjustment. The present invention achieves the object of adapting the wireless channels by changing the split threshold for the MAC frames in real-time, and the present flow includes the following steps:

Step 401: the data transmission starts, and the MAC layer service data packet is split according to an initial threshold for the length of the data frame. This initial threshold can be a threshold specified in IEEE 802.11 specification.

Step 402: the acknowledgement information (ACK) sent by a partner is read and recorded in real-time.

Step 403: it is determined whether the ACK information is successfully received continuously for a predetermined times within a predetermined time period. If so, the wireless network is of a good channel quality, and the process proceeds to steps 404 - 406, and otherwise steps 407 - 409 are performed.

This preset time period can be a product obtained by multiplying the number of the sent data frames by a time duration required for receiving one ACK specified in IEEE 802.11 specification. That is, the presetting of the predetermined time period is to configure a frequency to adaptively adjust the frame length, or in that the adaptive adjustment is performed once after how many data frames are sent.

In the present embodiment, the data packet loss is considered to be caused by interferences or noises, and the transmission medium for wireless communication are multi-user shared, and the data packet might be lost due to the collision of the data packets from different users. When only one packet is lost, it is not enough to conclude that the channel becomes worse. Similarly, the MAC frame lengths should not be increased immediately after only one data packet is successfully transmitted. The channel characteristics are considered to be definitely changed only when a plurality of continuous successful sending or unsuccessful sending occur. Therefore, while configuring the predetermined time period, the adaptive adjustment should not be performed each time one data packet is sent. And, the number of the received ACK information preset in the predetermined time period need not to be equal to that of the sent data frame, but can be set according to the number of loss packets allowable to the user. Thus, the preset number of the received ACK information can be a number obtained by subtracting the number of lost packets allowable to the user from the number of the sent data frames.

As it is described, the speed of the adaptive method in tracing the channel changes depends on the predetermined time period. When the predetermined time period is short, the trace performance of the adaptive method will be better, but it is possible to generate a larger deviation due to a too large tracing frequency. If the predetermined time period is long, the result of the algorithm will not largely deviate from the channel performance, but the tracing speed will be slower. The predetermined time period can be appropriately selected as necessary.

Steps 404 - 406: the threshold for the length of the data frame split from the MAC layer service data packet is increased; it is determined whether the threshold is larger than a maximum frame length threshold specified in IEEE 802.11 specification; if so, then the threshold for the length of the data frame is set to be equal to the maximum frame length threshold specified in IEEE 802.11 specification and then step 410 is performed, and otherwise step 410 is directly performed.

Steps 407 - 409: the threshold for the length of the data frame split from the MAC layer service data packet is decreased; it is determined whether the threshold is smaller than a minimum frame length threshold specified in IEEE 802.11 specification; if so, then the threshold for the length of the data frame is set to be equal to the minimum frame length threshold specified in IEEE 802.11 specification and then step 410 is performed, and otherwise step 410 is directly performed.

Step 410: the subsequent data are split according to the adjusted length of the data frame and then it returns to step 402 to process the subsequently transmitted data until the completion of this data transmission.

In the present embodiment, the amplitude of increasing and decreasing the frame length threshold can be set by the user as necessary, as long as the requirements of no oscillation occurrence during the adjustment and high transmission efficiency can be satisfied. Before actually implemented, a plurality of simulation experiments can be performed so as to obtain the appropriate amplitude to be used in the implementation. If oscillation or a case of low transmission efficiency occurs in the implementation, the amplitude can be further modified. Generally, it is appropriate that the increasing and decreasing amplitude for the frame length for each time is within a range of 0 - 100% of the previous threshold.

Therefore, the above two embodiments can continuously change the length of the payload data in the frame structure based on the wireless channel characteristics in the course of data transmission such that the data transmission with the nearly optimal data frame length is ensured at different bit error rates, thereby improving the efficiency of data transmission over wireless channels.

According to the above two embodiments, this method for improving channel transmission efficiency in a wireless network according to the present invention is able to effectively improve the efficiency of data transmission over wireless channels and can be easily implemented.

## Claims

1. A method for improving channel transmission efficiency in a wireless network which, in the course of data transmission, changes a length of a data frame split from a Media Access Control (MAC) layer service data packet in real-time according to a channel state of the wireless network.

2. The method according to Claim 1, wherein the method is in that: in the course of data transmission, the channel state of the wireless network is monitored in real-time, and if the channel of the wireless network is of a good quality or does not have a signal collision phenomenon, then the length of the data frame split from the Media Access Control (MAC) layer service data packet is increased, and if the channel of the wireless network is of a bad quality or has severe signal collisions, then the length of the data frame split from the Media Access Control (MAC) layer service data packet is decreased.

3. The method according to Claim 2, wherein it comprises steps of:
1) starting data transmission and splitting the MAC layer service data packet according to an initial threshold for the length of the data frame to transmit;
2) reading and recording acknowledgement information (ACK) sent by a partner in real-time;
3) determining the channel quality of the wireless network according to whether the ACK information has been successfully received for a predetermined times, if the channel of the wireless channel is of a good quality, then increasing the threshold for the length of the data frame split from the MAC layer service data packet, and otherwise decreasing the threshold for the length of the data frame;
4) splitting a subsequent MAC layer service data packet according to the threshold for the length of the data frame adjusted in step 3) to transmit;
5) repeating steps 2), 3) and 4) until the end of this data transmission.

4. The method according to Claim 3, wherein the initial threshold is a threshold specified in *Wireless LAN Media Access Control (MAC) and Physical Layer (PHY) Specifications* (IEEE 802.11).

5. The method according to Claim 3, wherein the step 3) includes steps of:
3A) presetting the times N for which the ACK information is continuously received successfully before increasing the threshold for the length of the data frame, and the times M for which the ACK information is continuously received unsuccessfully before decreasing the threshold for the length of the data frame;
3B) when the ACK information is continuously received successfully for N times, the channel of the wireless network being of a good quality and increasing the threshold for the length of the data frame;
3C) when the ACK information is continuously received unsuccessfully for M times, the channel of the wireless network being of a bad quality and decreasing the threshold for the length of the data frame.

6. The method according to Claim 3, wherein the step 3) includes steps of:
3a) presetting a time interval for adjusting the threshold for the length of the data frame;
3b) determining whether the ACK information is received for the predetermined times within the time interval preset in step 3a), if the ACK information is successfully received for the predetermined times, then the channel of the wireless network being of a good quality and increasing the threshold for the length of the data frame, and otherwise the channel of the wireless network being of a bad quality and decreasing the threshold for the length of the data frame.

7. The method according to Claim 6, wherein the preset time interval is a product obtained by multiplying the number of the sent data frames by a maximum time duration required from sending of one data frame to receipt of an ACK of this frame specified in IEEE 802.11 protocol.

8. The method according to Claim 6, wherein the predetermined times for receiving the ACK information is in a range between a number obtained by subtracting the number of lost packets allowable to the user from the number of the sent data frames and the number of the sent data frames.

9. The method according to Claim 3, wherein the increasing range of the threshold for the length of the data frame is to increase 0 - 100% of the previous threshold each time; and the decreasing range of the threshold for the length of the data frame is to decrease 0 - 100% of the previous threshold each time.

10. The method according to Claim 3, wherein the threshold for the length of the data frame is in a range from a minimum frame length threshold specified in IEEE 802.11 specification to a maximum frame length threshold specified in IEEE 802.11 specification.
